# EUROPEAN PATENT SPECIFICATION

(11) **EP 1 295 633 B1**
(45) Date of publication and mention of the grant of the patent: **15.03.2006**
(21) Application number: 01610097.6
(22) Date of filing: 18.09.2001
(51) Int. Cl.: B01J 2/16

(54) **Process for coating particles**
Verfahren zum Beschichten von Teilchen
Procédé de revetement de particules

(43) Date of publication of application: 26.03.2003
(73) Proprietor: Aeromatic-Fielder AG, 4416 Bubendorf (CH)
(72) Inventor: Tschudin, Roger, 4415 Lausen (CH)
(74) Representative: Simonsen, Christian Rosendal

(56) References cited:
- EP-A- 1 064 990
- WO-A-01/37980
- US-A- 4 489 504
- US-A- 5 718 764

## Description

### Field of the invention

Coating of particulate materials is applied within various industries and for various purposes.

In the present specification and the attached claims the term coating is applied in a broad sense as covering not only processes in which particles, including e.g. crystals, grains, pellets, tablets, pills, and other small bodies are covered with a relatively thin layer, but also processes in which particulate materials are built-up by applying one or more relatively thick layers on a core.

Coating operations are very important in the pharmaceutical industry, e.g. for protecting tablets and pellets against the influence of oxygen and humidity or to disguise a disagreeable taste. Furthermore, a coating often makes a tablet easier to swallow and it can be used for controlling the release pattern of the active drug after administration, e.g. to obtain a delayed release.

In the detergent industry, an enzyme layer is provided on a carrying core or extender, which layer is protected against oxidation and attrition by a coating which also reduces the formation of enzyme containing dust by the handling of the detergent.

Also fertilizers, plant protecting agents, and several other chemical products are coated.

Various processes have been suggested and applied for coating particulate materials, the present invention relates to such a process in which a coating liquid, such as a solution of a coating material, is applied by spraying on particles while airborne, followed by evaporation of volatile components of the coating liquid.

### Background of the invention

Several methods for coating a particulate material are based on the general principle that the coating liquid is sprayed upwards into a zone in which the particulate material is carried upwards by a stream of drying gas, such as air. Said zone is typically defined by substantially vertical wall means, e.g. a vertical duct, spaced from a horizontal or inclined base plate. The spraying of the coating liquid takes place from a nozzle placed in the centre line of said first zone at or somewhat above the level of the base plate at said centerline. An upward stream of preferably heated drying gas is introduced into said zone through at least one opening in the base plate below said zone. Particles introduced into said zone through the space below the base plate and the lower part of said wall means are carried upwards by the drying gas and are, mainly in the lower part of said zone, wetted by the sprayed coating liquid. During the continued movement upwards partial drying of the thus wetted particles takes place.

When reaching the top of the wall means defining said first zone, the expansion of the space available for the drying gas results in a substantial decrease of the upward velocity of the drying gas below the one needed for continued entraining of the particles. Consequently, the particles fall down into a zone partially defined by said wall means but on the opposite side thereof. Downwards, the second zone is defined by said base plate.

While present in said second zone, the particles are fluidised or at least aerated to increase their mobility by an upward stream of gas at substantial lower velocity than the gas stream in said first zone. The gas stream in the second zone is provided by supplying gas through perforations in the base plate below said second zone.

In some embodiments (cf. US Patent No. 5,718,764 (describing the PRECISION COATER™ from Aeromatic-Fielder AG) and US Patent No. 5,236,503), the gas introduced into said first zone and said second zone is supplied from a common plenum, and the differences of the upward velocity of the gases in these two zones are caused by the difference as to available passage through the openings in the base plate below the first zone and through the perforations in the base plate below the second zone.

However, it has also been suggested (cf. US Patent No. 5,470,387 (Niro A/S) and DE 3323418 A1) to supply the gas to said first and said second zone from different sources to allow for an independent regulation of the gas velocity, especially to combat blocking of the system.

Also WO 01/37980 A2 discloses an apparatus in which said two zones are supplied independently by separate gas ducts each having monitoring equipment for measuring the velocity, the pressure, the gas volume, the humidity and/or the temperature of the gas supplied. The monitoring equipment is connected to the gas source. The purpose is indicated to be obtainment and maintenance of a gas stream having suitable flow characteristics. There is no hint that operating the apparatus using a higher temperature in the first zone than in the second zone would involve any advantage.

Dependent on the desired thickness of the final coating and the amount and concentration of coating liquid sprayed into the first zone, the particles have to pass through both zones many times, typically up to some hundred.

This limits the capacity of such processes and has caused the development of equipments comprising several coating stations connected in series or parallel.

Many, and probably most, of the materials used for coating particles are more sticky when hot than when cold, at least when moist. Besides, the particles to be coated and the coating materials are often heat-sensitive.

When coating with such materials, an attempt to increase the capacity of the coating process by increasing the amount and/or the concentration of coating liquid and/or the temperature of the gas conducted to the two zones causes operational problems and inferior product quality due to agglomeration of the particles or sticking of particles to the equipment and, possibly, also due to heat damage.

Thus, there is a need for a coating process of the above type enabling an increased capacity and reducing the risk of particle agglomeration and heat damage and, thus, improving operational conditions and product quality.

### Summary of the invention

It is an object of the present invention to provide a process fulfilling the above need.

The invention is partly based on the recognition that in the prior art processes, wherein gas at the same temperature is introduced to the first and the second zone, the particles reach the highest temperature in the second zone because the evaporative cooling is less than in the first zone since the particles are more dry and the velocity of the gas relative to the particles is less. Moreover, the concentration of particles in the second zone is higher and particle agitation less than in the first zone. Both these facts increase the risk of agglomeration and heat damage in the second zone.

Accordingly, the invention deals with a process for coating particles by
circulating the particles upwards through a first zone and downwards through a second zone adjacent to the first zone,
atomizing a coating liquid into the first zone,
introducing a first stream of gas into the bottom part of said first zone in an amount and at a velocity sufficient for creating a gas flow in the first zone carrying the particles upwards through this zone while they are wetted by the atomized coating liquid and partly dried,
introducing a second stream of gas into the bottom portion of the second zone in an amount and at a velocity insufficient to form a gas flow in the second zone which would blow particles received from the top of the first zone out of the second zone, but sufficient to increase the flowability of the particles in this zone, which process is characterized in introducing said second stream of gas into said second zone at a temperature below the temperature at which said first stream of gas is introduced into said first zone.

The process of the invention compensates for the fact that the evaporative cooling of the particles in the second zone is less than in the first zone, which in the prior art processes involves a risk of overheating in said zone.

By using the principle of the present invention, it is possible to maintain a relatively low temperature in the second zone and thus of the particles therein, meaning the stickiness of the coating on the particles in this zone is less and the risk of heat damage is less than in conventional operation where the gas streams are introduced to the first and the second zone at the same temperature which, to obtain a necessary drying in the first zone, must exceed a certain minimum value.

Since the risk of agglomeration of the particles is higher in the second zone than in the first zone, *inter alia* because the number of particles per space unit is much higher in the second zone than in the first zone, it is an advantage to maintain a relatively low temperature in the second zone and at the same time maintain a relatively high temperature in the first zone and thereby achieve an efficient drying in the latter.

Thus, the process of the invention makes it possible to increase the drying in the first zone and decrease the risk of agglomeration and heat damage in the second zone which features enable increased capacity of the coating operation, enhanced product quality and an even coating since temporarily sticking together of the particles is diminished. Furthermore, the process enables coating with materials of low melting point, such as fats and waxy substances.

When the particles or the coating material comprises heat-sensitive components, such as pharmaceutically active compounds, it is also an advantage that the temperature in the second zone, where the particles are present during most of the coating processing, can be kept low.

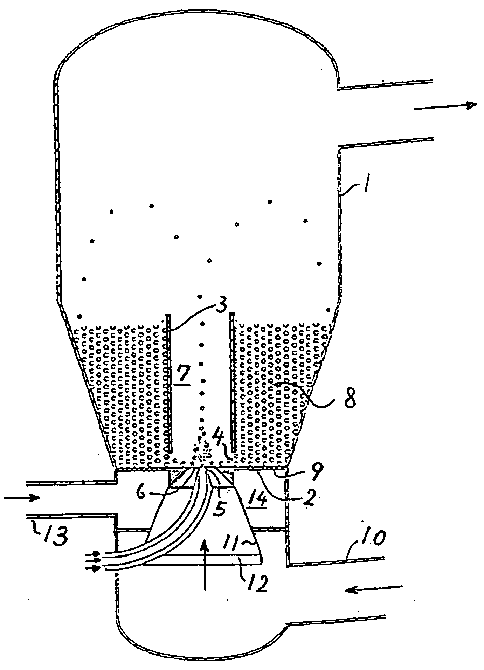

Important features of advantageous embodiments of the process are subject of the claims 2-10 and will be further elucidated in connection with the below explanation of the invention in which reference is made to the drawing.

### Brief description of the drawing

The sole figure of the drawing is a schematic, vertical section through an embodiment of an apparatus suitable for performing the process of the invention.

### Detailed description of the invention

Referring to the drawing, an apparatus is depicted comprising a housing 1 having a base plate 2, which in the depicted embodiment is horizontal but alternatively can be inclined as known in the art. A vertical duct 3 is somewhat spaced from the base plate, to provide a passage 4 for particles to be coated.

The portion of the base plate 2, which is encircled by the imaginary downward projection of duct 3, in the depicted embodiment has a central opening, in which an upwardly directed two-fluid-nozzle 5 is arranged leaving an annular aperture 6 for blowing a first stream of drying and transportation gas upwards into a first zone 7 encircled by the duct 3.

In the embodiment shown, the constructive details of the base plate including the annular aperture 6 correspond to those disclosed in US 5,718,764. Alternatively, the portion of the base plate under said zone 7 may be provided with a number of perforations through which gas is provided to the first zone 7.

The outer surface of the duct 3 and the walls of the housing 1 define a second zone 8. That part of the base plate 2, which is below the zone 8, is provided with perforations 9, through which fluidizing or aerating gas is introduced into the zone 8.

When performing the process, coating liquid, such as a coating material dissolved in an evaporable solvent is atomized through nozzle 5 by means of pressurized air also supplied to said nozzle.

Drying and operating gas is introduced into the zones 7 and 8 through the annular aperture 6 and the perforations 9, resp.

Particles to be coated move from the second zone 8 through the passage 4 into the first zone 7 where they meet the first upward gas stream introduced through the annular aperture 6 and are carried upwards therewith.

While being entrained by this gas and also by atomizing air from the nozzle 5, the particles are sprayed with atomized coating liquid from said nozzle.

When the first gas with entrained particles reaches the area above the first zone 7, the upward velocity decreases and the particles fall down into the second zone 8 outside the duct 3.

In the second zone 8, the upward gas velocity is such that the particles do not blow away but are either fluidised or at least aerated whereby the lifting action of the upward gas stream increases the mobility or flowability of the layer of particles residing in zone 8, to enable their flowing downwards to repeated introduction through passage 4 into the zone 7.

The gas introduced into the first zone 7 is provided through a duct 10 from where it, through a funnel-like member 11, reaches the annular aperture 6.

In a preferred embodiment, the funnel-like member 11 is provided with means 12 for imparting a swirling motion to the stream of gas leaving the aperture 6. Such means 12 are described in detail in US 5,718,764.

Gas to be introduced in the second zone 8 through the perforations 9 is provided through duct 13 and the annular space 14.

It is an essential feature of the process of the invention that the gas (the second stream of gas) supplied to the second zone 8 through duct 13, space 14, and perforations 9 is at lower temperature than the gas (the first stream of gas) supplied to the first zone 7 through duct 10, member 11, and annular aperture 6.

This means that the particles in the first zone 7 travel upwards through a swirling path while being sprayed and subsequently dried in the relatively hot gas supplied through duct 10 and are thereby subjected to an efficient drying before falling down into the second zone 8. While present in the hot, fast gas flow in the first zone evaporative cooling substantially reduces the risk of heat damage of the particles by maintaining this temperature below the temperature of the gas supplied to the first zone.

The particles leaving the first zone 7 fall down in the second zone 8, where the evaporation and thus the evaporated cooling is less, partly because the velocity of the gas relative to the particles is less than in the first zone, partly because less evaporable liquid is present on the particle surfaces. If the particles become too hot they will tempt to agglomerate in zone 8 where contact between particles is unavoidable.

However, since the second gas stream provided through 13 has a relatively low temperature, the particles maintain a relatively low temperature or even cool when reaching the second zone 8 and thereby their tendency of agglomerating is decreased. This, in turn, enables a higher capacity of the equipment and improved product qualities, especially when coating is made using thermo-sticking and/or heat-sensitive materials.

Examples of such coating materials are cellulose derivatives, acrylic polymers and copolymers, and other high-molecular polymer derivatives, e.g. methyl cellulose, hydroxy propylcellulose, hydroxy propylmethyl cellulose, ethyl cellulose, cellulose acetate, polyvinyl pyrrolidone, polyvinyl pyrrolidone acetate, polyvinyl acetate, polyvinyl methacrylates and ethylene vinylacetate copolymers, additives such as phthalic acid esters, triacetin, dibutylcebacate, monoglycerides, and polyethylene glycols.

Very promising results have been obtained using "Eudragit" polymers, which are anionic copolymers of methacrylic acid and methyl metacrylate.

Using an aqueous dispersion of a methacrylic acid-methyl metacrylate copolymer as coating liquid satisfactory results have been obtained introducing said first stream of gas at a temperature above 35° C and said second stream of gas at a temperature below 35° C.

Often it will be suitable to introduce the second gas stream through 13 at ambient temperature or at moderately increased temperature but it is also within the scope of the present invention to cool the second gas stream before introduction thereof.

As an alternative to the depicted apparatus, wherein the gas is supplied as separate streams at different temperatures via the ducts 10 and 13, the gas to the two zones 7 and 8 can be provided as a common, relatively hot stream via a plenum supplying both the opening(s) below zone 7 and the perforations below zone 8. The temperature difference characteristic for the process of the invention may then be obtained e.g. by blowing in cool gas just below the perforations 9. This embodiment only requires a moderate change of the existing PRECISION COATER™ equipment.

The temperatures in the coating zone may also be influenced by adjusting the temperature of the gas used for atomizing in the two-fluid nozzle 5.

For large-scale operations it is an advantage to use several treating stations as the one depicted in the drawing. In such an embodiment of the process, the particles partly coated by circulation through said first and said second zone are passed to at least one further first atomizing zone for circulation through this and through at least one second zone which may form a continuum with the first-mentioned second zone or may be separated therefrom. Embodiments of this type are described *inter alia* in the above-cited US 5,470,387, which discloses the passage of the particles through several treating cells connected in series, and in US 5,718,764, which discloses the arrangement of several coating zones arranged in a common second zone corresponding to the one termed 8 in the present drawing and the appurtenant explanation above.

The process of the invention is also advantageous for so-called layering, i.e. a process in which the particles are built-up by applying on each core particle two or more layers or coatings having different compositions.

For industrial production, the temperatures and rates of the various flows of gas and materials will be automatically adjusted based on signals obtained at suitable locations within the two zones or upstream or downstream thereof.

The process of the invention is further illustrated by means of the following examples, which show the importance of using a lower temperature in the down-flow or residence zone than in the spray zone.

### Examples

A comparison example and an example being an embodiment of the process of the invention were carried out using an apparatus in principle as the one depicted in the drawing, wherein the diameter of the duct 3 was 150 mm and of the aperture 6 it was 60 mm.

In both examples, the particles to be coated were nonpareil cores containing the pharmaceutically active, heat-sensitive substance. The coating liquid was an aqueous dispersion of the "Eudragit" polymer NE 30 D, which is a waxy metracrylic acid-methyl-metacrylate copolymer. This was applied as an aqueous dispersion having a solid content of 20% by weight.

In both examples, the amount of particles to be coated was the same, and the total amount of gas supplied to the zones 7 and 8 was substantially the same as specified below.

The amounts of coating liquid sprayed each minute through the nozzle 5, were varied to establish the maximum value thereof when operational problems due to agglomeration should be avoided. The thus established maximum spray rate is a suitable means for evaluating the capacity of the coating process.

### Comparison example

In this run, the gas was introduced into the zones 7 and 8 at the same temperature, viz. 45° C.

The maximum spray rate, as defined above, was 95 g/min.

### Embodiment example

This example was performed using the principle of the present invention. The temperature of the gas provided as a swirling flow through the aperture 6 up into the zone 7 was 65° C, whereas the gas supplied to the zone 8 through the perforations 9 was only 23/24° C.

In this embodiment it was possible to increase the maximum spray rate to 136 g/min. This spray rate was maintained the total time for completing treatment of a batch, i.e. a process time of 6 hours, without operational problems. No decrease of pharmaceutical activity due to heat damage of the drug in the cores was detected.

Thus, the application of the essential principle of the present invention enables an increase of the processing capacity of more than 40% without quality deterioration.

## Claims

1. A process for coating particles by circulating the particles upwards through a first zone and downwards through a second zone adjacent to the first zone,
atomizing a coating liquid into the first zone,
introducing a first stream of gas into the bottom part of said first zone in an amount and at a velocity sufficient for creating a gas flow in the first zone carrying the particles upwards through this zone while they are wetted by the atomized coating liquid and partly dried,
introducing a second stream of gas into the bottom portion of the second zone in an amount and at a velocity insufficient to form a gas flow in the second zone which would blow particles received from the top of the first zone out of said second zone, but sufficient to increase the flowability of the particles in the second zone,
**characterized in** introducing said second stream of gas at a temperature below the temperature at which said first stream of gas is introduced.

2. The process of claim 1,
**characterized in** establishing said first zone within a vertical duct and said second zone in an area surrounding the duct and defined downwards by a perforated gas distribution plate, and passing the particles to be coated from the bottom of the second zone to the bottom of the first zone through a spacing between said duct and said plate.

3. The process of anyone of claim 1 or 2,
**characterized in** introducing said first stream of gas into said first zone at a direction providing an upwardly swirling flow of gas and entrained particles in the first zone.

4. The process of anyone of the preceding claims,
**characterized in that** the coating liquid is atomized by means of a nozzle upwards from the centre of the bottom portion of the first zone.

5. The process of claim 4,
**characterized in that** said first stream of gas is introduced into the bottom part of the first zone through an annular aperture encircling the nozzle.

6. The process of anyone of the preceding claims,
**characterized in** using a coating liquid containing a substance which in dry or moist condition is sticky at the gas temperature prevailing in the upper portion of the first zone but less sticky at the temperature prevailing in the second zone.

7. The process of anyone of the preceding claims,
**characterized in** using a coating liquid containing a pharmaceutically active, heat-sensitive component.

8. The process of anyone of the preceding claims,
**characterized in** using an aqueous dispersion of a metacrylic acid-methyl methacrylate copolymer as coating liquid and introducing said first stream of gas at a temperature above 35° C and said second gas stream at a temperature below 35° C.

9. The process of anyone of the preceding claims,
**characterized in** passing particles partly coated by circulation through said first and second zones to at least one further first atomizing zone for circulation through this and through at least one second zone, which may form a continuum with the first-mentioned second zone or may be separated therefrom.

10. The process of anyone of the preceding claims, **characterized in** applying consecutively on each particle two or more layers of different composition.

## Revendications

1. Procédé de revêtement de particules par circulation des particules vers le haut à travers une première zone et vers le bas à travers une deuxième zone adjacent à la première zone,
pulvérisation d'un liquide de revêtement dans la première zone,
introduction d'un premier courant de gaz dans la portion inférieure de ladite première zone dans une quantité et à une vitesse suffisantes pour créer un courant de gaz dans la première zone faisant remonter les particules à travers cette zone en étant humidifiées par le liquide de revêtement pulvérisé et partiellement séchées,
introduction d'un deuxième courant de gaz dans la portion inférieure de la deuxième zone dans une quantité et à une vitesse insuffisantes pour former un courant de gaz dans la deuxième zone capable de souffler des particules reçues de la portion supérieure de la première zone en dehors de ladite deuxième zone, mais suffisantes pour renforcer la flottabilité des particules dans le deuxième zone,
**caractérisé en** introduisant ledit deuxième courant de gaz à une température au-dessous de la température à laquelle ledit premier courant de gaz est introduit.

2. Procédé selon la revendication 1,
caractérisé en établissant ladite première zone dans un conduit vertical et ladite deuxième zone dans une étendue entourant le conduit et définie vers le bas par une plaque perforée distributrice de gaz, et déplaçant les particules à revêtir depuis la portion inférieure de la deuxième zone à la portion inférieure de la première zone à travers un espace entre ledit conduit et ladite plaque

3. Procédé selon l'une quelconque des revendications 1 ou 2,
caractérisé en introduisant ledit premier courant de gaz dans ladite première zone à une direction assurant un courant de gaz tourbillonnant vers le haut et des particules entraînées dans la première zone.

4. Procédé selon l'une quelconque des revendications précédentes,
**caractérisé en ce que** le liquide de revêtement est vaporisé au moyen d'une tuyère orientée vers le haut depuis le centre de la portion inférieure de la première zone.

5. Procédé selon la revendication 4,
**caractérisé en ce que** ledit premier courant de gaz est introduit dans la portion inférieure à travers une ouverture annulaire entourant la tuyère.

6. Procédé selon l'une quelconque des revendications précédentes,
**caractérisé en** utilisant un liquide de revêtement contenant une stibstance qui, dans un état sec ou humide, est collante à la température de gaz prédominante dans la deuxième zone.

7. Procédé selon l'une quelconque des revendications précédentes,
**caractérisé en** utilisant un liquide de revêtement contenant un composant actif au niveau pharmaceutique et sensible à la chaleur.

8. Procédé selon l'une quelconque des revendications précédentes,
**caractérisé en** utilisant une solution aqueuse d'un copolymère méthacrylate d'acide-méthyle méthacrylique en tant que liquide de revêtement et introduisant ledit premier courant de gaz à une température supérieure à 35° C et ledit deuxième courant de gaz à une température inférieure à 35° C.

9. Procédé selon l'une quelconque des revendications précédentes,
caractérisé en faisant des particules partiellement revêtues traverser par circulation lesdites première et deuxième zones à au moins une première zone de vaporisation supplémentaire pour circulation à travers celle-ci et à travers au moins une deuxième zone qui peut former un continuum avec la deuxième zone première nommée ou peut être séparée de celle-ci.

10. Procédé selon l'une quelconque des revendications précédentes, **caractérisé par** une application continue sur chaque particule de deux ou de plusieurs couches de différente composition.

## Patentansprüche

1. Verfahren zum Beschichten von Partikeln durch Zirkulieren der Partikeln nach oben durch eine erste Zone und nach unten durch eine an die erste Zone angrenzende zweite Zone,
Zerstäuben einer Beschichtungsflüssigkeit in die erste Zone,
Einleiten eines ersten Gasstroms in den Bodenteil der ersten Zone in einer Menge und mit einer Geschwindigkeit, die ausreichend ist zur Erzeugung einer Gasströmung in der ersten Zone, um die Partikeln durch diese Zone nach oben zu leiten, während diese durch die zerstäubte Beschichtungsflüssigkeit befeuchtet und teilweise getrocknet werden,
Einleiten eines zweiten Gasstroms in den Bodenteil der zweiten Zone in einer Menge und mit einer Geschwindigkeit, die nicht ausreichend ist zur Bildung einer Gasströmung in der zweiten Zone, die von der ersten Zone oben erhaltene Partikeln aus der zweiten Zone ausbläst, aber ausreichend ist zur Erhöhung der Strömungsfähigkeit der Partikeln in der zweiten Zone,
**gekennzeichnet durch** Einleiten des zweiten Gasstroms bei einer Temperatur, die unter der Temperatur liegt, bei welcher der erste Gasstrom eingeleitet wurde.

2. Verfahren nach Anspruch 1,
**gekennzeichnet durch** Herstellung der ersten Zone innerhalb eines senkrechten Kanals und der erwähnten zweiten Zone in einem den Kanal umgebenden Bereich, der nach unten **durch** eine perforierte Gasverteilungsplatte abgegrenzt ist, und Leiten der zu beschichtenden Partikeln vom Boden der zweiten Zone zum Boden der ersten Zone **durch** einen Zwischenraum zwischen dem Kanal und der Platte.

3. Verfahren nach einem der Ansprüche 1 oder 2,
**gekennzeichnet durch** Einleiten des ersten Gasstroms in die erste Zone in einer Richtung, die zu einer nach oben wirbelnden Gasströmung und in der ersten Zone mitgeführten Partikeln führt.

4. Verfahren nach einem der vorhergehenden Ansprüche,
**dadurch gekennzeichnet, dass** die Beschichtungsflüssigkeit aufwärts des Zentrums des Bodenteils der ersten Zone zerstäubt wird.

5. Verfahren nach Anspruch 4, **dadurch gekennzeichnet, dass** der erste Gasstrom durch eine ringförmige, die Düse umgebende Öffnung in den Bodenteil der ersten Zone eingeleitet wird.

6. Verfahren nach einem der vorhergehenden Ansprüche, **gekennzeichnet durch** Verwendung einer Beschichtungsflüssigkeit, die eine Substanz enthält, welche in trockenem oder feuchtem Zustand bei der im oberen Teil der ersten Zone herrschenden Gastemperatur klebrig ist, aber bei der in der zweiten Zone herrschenden Temperatur weniger klebrig ist.

7. Verfahren nach einem der vorhergehenden Ansprüche, **gekennzeichnet durch** Verwendung einer Beschichtungsflüssigkeit enthaltend einen pharmazeutisch wirksamen, wärmeempfindlichen Bestandteil.

8. Verfahren nach einem der vorhergehenden Ansprüche, **gekennzeichnet durch** Benutzung einer wässrigen Dispersion eines metacrylisch acid-methyl Methacrylat-Copolymers als Beschichtungsflüssigkeit und Einleiten des ersten Gasstroms bei einer Temperatur über 35° C und des zweiten Gasstroms bei einer Temperatur unter 35°C.

9. Verfahren nach einem der vorhergehenden Ansprüche, **gekennzeichnet durch** Leiten teilweise beschichteter Partikeln durch Zirkulation **durch** erwähnte erste und zweite Zonen in mindestens eine weitere erste Zerstäubungszone zwecks Zirkulieren **durch** diese Zone und **durch** mindestens eine zweite Zone, welche eine Fortsetzung mit ersterwähnter zweiten Zone sein kann oder von dieser getrennt sein kann.

10. Verfahren nach einem der vorhergehenden Ansprüche, **gekennzeichnet durch** aufeinanderfolgendes Auftragen auf jedes Partikel von zwei oder mehreren Schichten verschiedener Zusammensetzung.
